(19) Europäisches Patentamt
European Patent Office
Office européen des brevets

(11) Publication number: **0 018 049**
**B1**

(12) # EUROPEAN PATENT SPECIFICATION

(45) Date of publication of patent specification: 28.04.82

(51) Int. Cl.$^3$: C 08 G 69/26, C 08 L 23/02

(21) Application number: 80200344.2

(22) Date of filing: 16.04.80

(54) **Polyamide, polyalkene modified therewith and articles thereof.**

(30) Priority: 17.04.79 NL 7902972
28.12.79 GB 7944527

(43) Date of publication of application:
29.10.80 Bulletin 80/22

(45) Publication of the grant of the patent:
28.04.82 Bulletin 82/17

(84) Designated Contracting States:
AT BE CH DE FR GB IT LI LU NL SE

(56) References cited:
FR - A - 1 216 834
FR - A - 2 383 209
FR - A - 1 528 212
FR - A - 1 561 128

(73) Proprietor: UNILEVER NV
Burgemeester 's Jacobplein 1
NL-3000 DK Rotterdam (NL)
(84) BE CH DE FR IT LI LU NL SE AT
(73) Proprietor: UNILEVER PLC
Unilever House Blackfriars P O Box 68
London EC4P 4BQ (GB)
(84) GB

(72) Inventor: Hinze, Adrien George
Cornelis van Beverenstraat 35
NL-3311 LH Dordrecht (NL)
Inventor: Roggeveen, Robert Pieter
Waterlustlaan 87
NL-2804 KX Gouda (NL)
Inventor: Meulenberg, Abraham Jan
Marathonlaan 26
NL-2807 BB Gouda (NL)

(74) Representative: Wiesenhaan, Herman, Drs. et al,
Unilever N.V., Patent Division P.O.Box 137
NL-3130 AC Vlaardingen (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

# Polyamide, polyalkene modified therewith and articles thereof

The application relates to polyamides of a certain structure and to polyalkenes in which small amounts of these polyamides have been incorporated so as to improve the dyeability of this polyalkene for acid dyestuffs.

It is well known that in general polyalkenes have a poor dyeability because of the lack of polar groups which can function as points of attachment for dye molecules. Consequently, up to now much attention has been paid to the development of polyalkene in which the desired polar groups are present and which as a result display good dyeability. A good dyeability is a collective name for a good colour intensity, a good homogeneity and a good colour fastness of the dyed modified polyalkene.

In the literature various polyalkenes modified with basic polyamides have been described. Thus, Dutch patent specification No. 6711645 describes polyalkylene that has been modified with a basic compound, for example a polyamide, in which the basic nitrogen groups have been at least partly converted into a salt with the aid of a strong acid. The polyamide used in this manner is built up of aliphatic polyamines, preferably of the formulae:

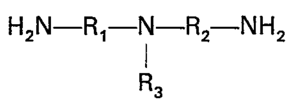 and 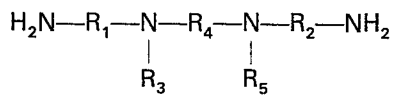

in which $R_1$, $R_2$ and $R_4$ are alkylene groups, preferably $C_1$—$C_6$, and $R_3$ and $R_5$ are a hydrogen atom or a $C_1$—$C_{16}$ alkyl group. Aliphatic, aromatic, cycloalkyl- and alkylaryldiamines can also be used. Furthermore the polyamide contains as carboxylic acid component aliphatic acids such as succinic acid, glutaric acid, adipic acid, 2,2,4-trimethyl adipic acid, suberic acid, azelaic acid, sebacic acid and dodecane dioic acid, while alkyl-substituted aliphatic dicarboxylic acids, dimeric unsaturated fatty acids, aromatic, cycloalkyl and alkylaryl dicarboxylic acids can also be used. For a satisfactory dyeing result, neutralisation of the basic polyamides with a strong acid is considered necessary.

In French patent application 1528212 polyalkene modified with basic polyamide is described, the polyamide being built up of a polyamine containing not more than two primary amino groups and one or more tertiary amino groups, as well as a dicarboxylic acid which generally contains up to 10 carbon atoms. An enumeration is given of some general formulae for suitable polyamines, including

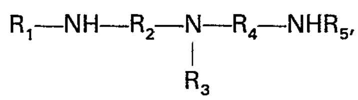,

as well as a number of dicarboxylic acids, while further diamine, particularly aliphatic diamine, can replace part of the polyamine.

In the Examples, polyamides are described which are based on hexamethylenediamine, N,N'-bis(3-aminopropyl)methyl amine and either azelaic acid or sebacic acid (Example 1 and Example II(1). respectively).

The known modified polyalkenes, such as those described in the patent application cited above, are, however, not entirely satisfactory as far as their dyeability is concerned, as is shown in the comparative examples below.

It has now been discovered that by modifying polyalkenes with certain novel polyamides, excellent dyeing properties such as colour intensity, colour homogeneity and colour fastness can be obtained.

The novel polyamide compositions according to the invention make it possible to obtain excellent dyeing results with low percentages being added, whereby, moreover, no neutralising step is necessary. Adding low percentages is important because this will as much as possible prevent the additive from affecting the properties of the polyalkene.

These novel polyamides have an acid value below 15, preferably below 10, an amine number of 50—200, preferably of 75—150 (all in mg KOH/g) and are built up from groups derived from

A) An aliphatic diamine with 2—3 carbon atoms between the nitrogen atoms;
B) A triamine of the formula

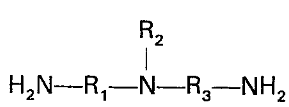

in which $R_1$ and $R_3$ represent alkylene groups and $R_2$ represents an alkyl group, which groups can contain 1 to 6 carbon atoms;

C) An aliphatic dicarboxylic acid containing 6 to 19 carbon atoms; and

D) A polymerised unsaturated fatty acid having 16—22 carbon atoms comprising 3—25 mol.% of the total carboxylic acids. The best results are obtained when this mol. percentage is 15—25.

Furthermore French Specification 1,216,834 and Dutch specification 6715477 disclose polyamides based on polyamines containing one or more secondary amine groups, but not tertiary amine groups. The use of these polyamides in polyalkenes is not disclosed either.

French Specification 2383209 discloses polyamides which are said to be useful in hot melt adhesives with a carboxylic acid constituent consisting of 40—100 mol.% polymeric fatty acid and 0—60 mol.% of $C_2$—$C_{12}$ dicarboxylic acid.

The preferred aliphatic diamine is ethylenediamine, but propanediamine-1,2, propanediamine-1,3, 2-methyl-propanediamine-1,3 and 2,2-dimethyl-propanediamine 1,3 can also be used. Consequently, what are involved here are diamines in which 2 or 3 carbon atoms are situated in a straight chain between both nitrogen atoms of both primary amino groups, while still lower alkyl branching, preferably methyl, can also be present.

Suitable triamines are compounds of the formula

$$H_2N—R_1—\underset{}{\overset{R_2}{\overset{|}{N}}}—R_3—NH_2,$$

in which $R_1$ and $R_3$ are $C_1$—$C_6$ alkylene groups and $R_2$ is a $C_1$—$C_6$ alkyl group. Preferably $R_1$ and $R_3$ contain 2—4 carbon atoms and $R_2$ represents a methyl group. It is not necessary that $R_1$ and $R_2$ contain the same number of carbon atoms. Thus, N,N′-bis(3-aminopropyl)methyl amine can be used, which is in particular preferred, but

N,N′-bis(2-aminoethyl)methyl amine,
N,N′-bis(4-aminobutyl)methyl amine and
N,N′-bis(3-aminopropyl)ethyl amine,
can also be used.

The molar ratio of aliphatic diamine to the triamine is generally 0.4—1.5:1, preferably 0.4—0.8:1.

The dicarboxylic acid used can be adipic acid, 2,2,4-trimethyladipic acid, suberic acid, azelaic acid, sebacic acid, dodecanedioic acid, generally speaking aliphatic dicarboxylic acids containing 6—19 carbon atoms, preferably 6—12 carbon atoms, those with a total of 6 or 9 carbon atoms giving the best results.

The polymerised fatty acids suitable for use can be the known thermally or catalytically polymerised unsaturated fatty acids having 16—22 carbon atoms, preferably 18 carbon atoms. The polymerised fatty acids should consist at least 75% by weight of dimeric fatty acids, preferably $C_{36}$ acids the balance consisting for the larger part of trimeric fatty acids; preferably the polymerised fatty acids used contain at least 90% by weight of dimer. Also there is a preference for the use of hydrogenated polymeric fatty acids.

Sometimes it is desirable, in connection with the viscosity control of the polyamide, also to incorporate a small percentage of a monocarboxylic acid or monoamine. This percentage is, in addition, dependent on the monomer content of the polymerised fatty acids and is usually less than 10 mol.% of the total carboxylic acid component or amine component. These compounds will usually contain 6—20 carbon atoms.

The novel polyamides are prepared from the amines and carboxylic acids by conventional process steps. Generally there is a very small molecular excess of amine or carboxylic acid present. Besides the amine and carboxylic acid, it is also possible to convert their functional derivatives, e.g. lower alkyl esters of the carboxylic acids or some salts of the amines. Generally the ingredients are brought together in a four-necked flask provided with cooler, stirrer, thermometer and inlet-tube for gas ($N_2$), and the reaction mixture heated to 170°—250°C — generally 200°—210°C — and kept at that temperature for four hours, during which the water of reaction distills off. Thus a light-yellow liquid is obtained, which is poured out, cooled to a hard, brittle material, broken and ground, and of which the indicated constants are determined.

The novel polyamide thus obtained can be used according to the invention for modifying polyalkene by incorporating therein 0.5 to 10% by weight — calculated on the polyalkene — of said polyamide and distributing it homogeneously therein. Preferably 3—8% by weight of the polyamide is incorporated.

A polyalkene suitable for use is polypropylene, particularly isotactic polypropylene, also linear polyethane or copolymers thereof as well as stereoregular 4-methylpentene-1.

The incorporation of the polyamide in the polyalkene can be effected by mixing it into the melt, by extruding together or rolling together. From the polyalkene thus modified, fibres, foils and other articles

can be manufactured which possess an improved dyeability with respect to dyes with acid groups. The invention thus provides dyed or undyed articles which consist completely or partly of modified polyalkene.

The invention will now be further illustrated with reference to the following Examples:

Examples 1—4

A series of polyamides was prepared as described above, starting from the materials indicated in the Table below, the quantities being indicated in moles. For comparison, a polyamide according to Example (1) of French patent application 1528212 was also prepared, as well as comparative Example (2), in which the relative amounts of amines were changed. Amine number, acid value, softening point (ball & ring), as well as the viscosity at 190° were determined (cf. Table 1)

TABLE 1

| | Comp. (1) | Comp. (2) | 1 | 2 | 3 | 4 |
|---|---|---|---|---|---|---|
| Azelaic acid | 4.0 | 4.0 | 3.6 | 3.6 | | 3.3 |
| Sebacic acid | | | | | 4.0 | |
| Stearic acid | | 0.2 | | | | |
| Dimeric fatty acid | | | 0.4 [1)] | 0.4 [1)] | 0.4 [2)] | 0.7 [1)] |
| BAPMA | 2.28 | 2.57 | 2.57 | 2.57 | 2.57 | 2.21 |
| HMDA | 2.30 | 1.76 | | | | |
| EDA | | | 1.76 | | | 1.83 |
| PDA 1,2 | | | | | 1.76 | |
| PDA 1,3 | | | | 1.76 | | |
| Amine number mgKOH/g | 113 | 115 | 119 | 134 | 122 | 90 |
| Acid value mgKOH/g | 0.7 | 3.8 | 2.8 | 4.0 | 4.1 | 5.5 |
| Softening point °C | 117 | 157 | 171 | 159 | 130 | 175 |
| Viscosity (Pa.S) (190°C) | 5.3 | 4.6 | 5.2 | 1.15 | 2.85 | 4.9 |

The abbreviations used in Table 1 have the following meaning:

BAPMA is N,N'-bis(3-aminopropyl)methyl amine
HMDA is hexamethylenediamine
EDA is ethylenediamine
PDA is propanediamine

1) commercially available fractionated and hydrogenated polymeric fatty acids (DIMER:TRIMER:MONOMER = 95:5:0.1).

2) here a non-hydrogenated polymeric fatty acid with a dimer:trimer ratio of 80:20 was used.

The polyamides described above were added in amounts of 5% —calculated on the polyalkene — to isotactic polypropylene and homogeneously distributed therein by rolling at 175°C for 8 to 10 minutes. A film of about 2 mm thickness was taken from the roller and this film was cut into test strips of about 2.5 x 4.0 cm. These test strips were dyed with the dye Lissamine Blue B (ex I.C.I.). For this purpose a 0.1% by weight solution of the dye in distilled water was prepared. To this solution was added 0.1% by weight of formic acid and the whole was diluted to 0.075% dye. The solution was brought to 100°C, whereafter the test strips were held in the bath for 4 hours at this temperature. At the end of that period they were taken out of the dye solution, rinsed and washed with soap. The dyeing result was judged visually for colour intensity, colour homogeneity and colour fastness. The results

appeared to vary very greatly, to wit from barely coloured to streaky, light blue and glossy deep blue. The total impression was expressed in four gradations, passing from —, 0, +, to ++.

The evaluation was as follows:

| Comp. (1) | (Comp. (2) | Ex. 1 | Ex. 2 | Ex. 3 | Ex. 4 |
|---|---|---|---|---|---|
| — | 0 | ++ | ++ | ++ | + |

**Claims for the Contracting States BE, CH, DE, FR, IT, LI, LU, NL, SE**

1. Polyamide with an acid value below 15 and an amine number of 50—200, built up from groups derived from:

A) an aliphatic diamine with 2 or 3 carbon atoms between the nitrogen atoms;

B) a triamine of the formula

$$H_2N—R_1—\underset{\displaystyle R_2}{\underset{|}{N}}—R_3—NH_2$$

in which $R_1$ and $R_3$ represents $C_1$—$C_6$ alkylene groups; and $R_2$ represents a $C_1$—$C_6$ alkyl group;

C) an aliphatic dicarboxylic acid containing 6—19 carbon atoms;

D) a polymerized unsaturated fatty acid having 16—22 carbon atoms which constitutes 3—25 mol.% of the total carboxylic acid constituent.

2. Polyamide according to Claim 1, characterized in that the aliphatic diamine is ethylene diamine.

3. Polyamide according to claim 1 or 2, characterized in that in the triamine $R_1$ and $R_3$ represent propylene and $R_2$ represents a methyl group.

4. Polyalkene modified by incorporation therein of 0.5 to 10% by weight calculated on the polyalkene of a polyamide, characterized in that as the polyamide a polyamide according to any one of Claims 1 to 3 is used.

5. Shaped articles, completely or partly consisting of polyalkene according to Claim 4.

**Claims for the Contracting State AT**

1. A process for the preparation of a polyamide with an acid value below 15 and an amine number of 50—200, in which a polamine or a functional derivative thereof and polycarboxylic acid constituent or functional derivative thereof are reacted at a temperature between 170° and 250°C, characterized in that the polyamine constituent comprises

A) an aliphatic diamine with 2 or 3 carbon atoms between the nitrogen atoms;

B) a triamine of the formula

$$H_2N—R_1—\underset{\displaystyle R_2}{\underset{|}{N}}—R_3—NH_2$$

in which $R_1$ and $R_3$ represents $C_1$—$C_6$ alkylene groups; $R_2$ represents a $C_1$—$C_6$ alkyl group and the polycarboxylic acid constituent comprises

C) an aliphatic dicarboxylic acid containing 6—19 carbon atoms;

D) a polymerized unsaturated fatty acid having 16—22 carbon atoms which constitutes 3—25 mol.% of the total carboxylic acid constituent.

2. A process according to Claim 1, characterized in that the aliphatic diamine is ethylene diamine.

3. A process according to claim 1 or 2, characterized in that in the triamine $R_1$ and $R_3$ represent propylene and $R_2$ represents a methyl group.

4. A process for modifying polyalkene by incorporating therein from 0.5 to 10% by weight calculated on the polyalkene of a polyamide, characterized in that the polyamide has been prepared according to any one of Claims 1 to 3.

5. Shaped articles, completely or partly consisting of polyalkene according to Claim 4.

**Patentansprüche für die Vertragsstaaten BE, CH, DE, FR, GB, IT, LI, LU, NL, SE**

1. Polyamid mit einer Säurezahl von unterhalb 15 und einer Aminzahl von 50 bis 200, aufgebaut aus Gruppen, die von

(A) einem aliphatischen Diamin mit 2 bis 3 Kohlenstoffatomen zwischen den Stickstoffatomen
(B) einem Triamin der Formel

$$H_2N-R_1-\underset{\displaystyle R_2}{\underset{|}{N}}-R_3-NH_2$$

worin $R_1$ und $R_3$ $C_1$-bis $C_6$-Alkylengruppen und $R_2$ ein $C_1$-bis $C_6$-Alkylgruppe darestellen,
(C) einer aliphatischen Dicarbonsäure mit einem Gehalt von 6 bis 19 Kohlenstoffatomen,
(D) einer polymerisierten ungesättigten Fettsäure mit 16 bis 22 Kohlenstoffatomen, die 2 bis 25 Mol% des gesamten Carbonsäurebestandteils ausmacht, abgeleitet sind.

2. Polyamid nach Anspruch 1, dadurch gekennzeichnet, daß das aliphatische Diamin Äthylendiamin ist.

3. Polyamid nach Anspruch 1 oder 2, dadurch gekennzeichnet, daß in dem Triamin $R_1$ und $R_3$ Propylen und $R_2$ eine Methylgruppe bedeuten.

4. Polyalken, modifiziert durch die Einverleibung von 0,5 bis 10 Gew.%, berechnet auf der Basis von Polyalken, eines Polyamids, dadurch gekennzeichnet, daß als Polyamid ein Polyamid gemäß einem der Ansprüche 1 bis 3 verwendet wird.

5. Geformte Gegenstände, vollständig oder teilweise bestehend aus einem Polyalken gemäß Anspruch 4.

**Patentansprüche für der Vertragslaat AT**

1. Verfahren zur Herstellung eines Polyamids mit einer Säurezahl von unterhalb 15 und einer Aminzahl von 50 bis 200, worin ein Polyamin oder ein funktionelles Derivat hiervon und ein Polycarbonsäurebestandteil oder ein funktionelles Derivat hiervon bei einer Temperatur zwischen 170 und 250°C umgesetzt werden, dadurch gekennzeichnet, daß der Polyaminbestandteil

(A) ein aliphatisches Diamin mit 2 oder 3 Kohlenstoffatomen zwischen den Stickstoffatomen
(B) ein Triamin der Formel

$$H_2N-R_1-\underset{\displaystyle R_2}{\underset{|}{N}}-R_3-NH_2$$

worin $R_1$ und $R_3$ $C_1$- bis $C_6$-Alkylengruppen darstellen und $R_2$ eine $C_1$- bis $C_6$-Alkylgruppe bedeutet, und der Polycarbonsäurebestandteil
(C) eine aliphatische Dicarbonsäure mit einem Gehalt von 6 bis 19 Kohlenstoffatomen und
(D) eine polymerisierte ungesättigte Fettsäure mit 16 bis 22 Kohlenstoffatomen, welche 3 bis 25 Mol% des gesamten Carbonsäurebestandteils ausmacht, umfassen.

2. Verfahren nach Anspruch 1, dadurch gekennzeichnet, daß das aliphatische Diamin Äthylendiamin ist.

3. Verfahren nach einem der Ansprüche 1 oder 2, dadurch gekennzeichnet daß in dem Triamin $R_1$ und $R_3$ Propylen und $R_2$ eine Methylgruppe bedeuten.

4. Verfahren zum Modifizieren von Polyalken durch Einverleibung von 0,5 bis 10 Gew.%, berechnet auf Basis des Polyalkens, eines Polyamids in dasselbe, dadurch gekennzeichnet daß das Polyamid nach einem der Ansprüche 1 bis 3 hergestellt worden ist.

5. Geformte Gegenstände, vollständig oder teilweise bestehend aus einem gemäß Anspruch 4 hergestellten Polyalken.

**Revendications pour les Etats Contractants BE, CH, DE, FR, GB, IT, LI, LU, NL, SE**

1. Polyamide ayant un indice d'acide inférieur à 15 et un indice d'amine de 50 à 200, constitué par des radicaux dérivant de

A) un diamine aliphatique comptant 2 ou 3 atomes de carbone entre les atomes d'azote,
B) une triamine de formule:

$$H_2N-R_1-\underset{\displaystyle R_2}{\underset{|}{N}}-R_3-NH_2$$

dans laquelle $R_1$ et $R_3$ représentent des radicaux alcoylène en $C_1$—$C_6$ et $R_2$ représente un radical alcoyle en $C_1$—$C_6$,

C) un acide dicarboxylique aliphatique comptant 6 à 19 atomes de carbone,

D) un acide gras de 16 à 22 atomes de carbone insaturé polymérisé qui constitue 3 à 25 moles % du constituant acide carboxylique total.

2. Polyamide suivant la revendication 1, caractérisé en ce que la diamine aliphatique est l'éthylènediamine.

3. Polyamide suivant la revendication 1 ou 2, caractérisé en ce que dans la triamine $R_1$ et $R_3$ représentent des radicaux propylène et $R_2$ représente un radical méthyle.

4. Polyalcoylène modifié par incorporation à celui-ci de 0,5 à 10% en poids, à calculer sur le polyalcoylène, d'un polyamide, caractérisé en ce que le polyamide utilisé est un polyamide suivant l'une quelconque des revendications 1 à 3.

5. Articles façonnés consistant complètement ou pour partie en un polyalcoylène suivant la revendication 4.

**Revendications pour l'Etat contractant AT**

1. Procédé de préparation d'un polyamide ayant un indice d'acide inférieur à 15 et un indice d'amine de 50 à 200, suivant lequel on fait réagir à une température comprise entre 170 et 250°C une polyamine ou un de ses dérivés fonctionnels et un constituant acide polycarboxylique ou un de ses dérivés fonctionnels, caractérisé en ce que le constituant, polyamine comprend:

A) une diamine aliphatique comptant 2 our 3 atomes de carbone entre les atomes d'azote,

B) une triamine de formule:

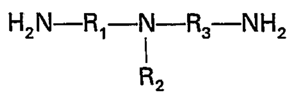

dans laquelle $R_1$ et $R_3$ représentent des radicaux alcoylène en $C_1$—$C_6$ et $R_2$ représente un radical alcoyle en $C_1$—$C_6$, et le constituant acide polycarboxylique comprend:

C) un acide dicarboxylique aliphatique comptant 6 à 19 atomes de carbone,

D) un acide gras de 16 à 22 atomes de carbone insaturé polymérisé qui constitue 3 à 25 moles% du constituant acide carboxylique total.

2. Procédé suivant la revendication 1, caractérisé en ce que la diamine aliphatique est l'éthylène-diamine.

3. Procédé suivant l'une quelconque des revendications 1 et 2, caractérisé en ce que dans la triamine $R_1$ et $R_3$ représentent des radicaux propylène et $R_2$ représente un radical méthyle.

4. Procédé pour modifier un polyalcoylène par incorporation à celui-ci de 0,5 à 10% en poids, à calculer sur le polyalcoylène, d'un polyamide, caractérisé en ce que le polyamide a été préparé suivant l'une qualconque des revendications 1 à 3.

5. Articles façonnés consistant complètement ou pour partie en un polyalcoylène préparé suivant la revendication 4.